# NEUE EUROPÄISCHE PATENTSCHRIFT

(11) **EP 2 133 991 B2**
(45) Veröffentlichungstag und Bekanntmachung des Hinweises auf die Entscheidung über den Einspruch: **25.08.2021**
(45) Hinweis auf die Patenterteilung: 08.06.2011
(21) Anmeldenummer: 08010443.3
(22) Anmeldetag: 09.06.2008
(51) Int. Cl.: H02P 21/00, F04D 15/00, F04D 13/06

(54) **Kreiselpumpenaggregat**
Centrifugal pump assembly
Agrégat de pompe centrifuge

(43) Veröffentlichungstag der Anmeldung: 16.12.2009
(73) Patentinhaber: Grundfos Management A/S, 8850 Bjerringbro (DK)
(72) Erfinder: Aarestrup, Jan Carøe, 8850 Bjerringbro (DK); Rasmussen, Keld Folsach, 8620 Kjellerup (DK)
(74) Vertreter: Patentanwälte Vollmann Hemmer Lindfeld Partnerschaft mbB

(56) Entgegenhaltungen:
- EP-A- 0 638 457
- EP-A- 1 087 513
- EP-A- 1 414 145
- EP-A- 1 843 463
- US-A- 5 240 380
- US-B1- 6 965 212
- Auszug aus dem Hauptkatalog A1 'Umwaelzpumpen', WILO SE
- Gutachten zur europaeischen Patentanmeldung 08010443.3, Kreiselpumpenaggregat

## Beschreibung

Die Erfindung betrifft ein Kreiselpumpenaggregat mit einem elektrischen Antriebsmotor und einer einen Frequenzumrichter aufweisenden Steuereinrichtung zur Drehzahlsteuerung des Antriebsmotors.

Es sind Kreiselpumpenaggregate bekannt, bei welchen der elektrische Antriebsmotor mittels eines Frequenzumrichters angesteuert wird, um die Drehzahl des Antriebsmotors und damit des Kreiselpumpenaggregates variieren zu können. Dabei ist es sehr erstrebenswert, das Pumpenaggregat mit größtmöglicher Effizienz betreiben zu können. Die maximal zur Verfügung stehende hydraulische Leistung ist bei bekannten Kreiselpumpenaggregaten durch die maximale Frequenz sowie den maximalen Lastzyklus des Frequenzumrichters begrenzt. Dabei sind die Pumpenaggregate in der Regel derart ausgelegt, dass an zumindest einem Punkt der Pumpenkennlinie mit maximaler Drehzahl der maximale Lastzyklus mit maximaler Ausgangsspannung des Frequenzumrichters gegeben ist, sodass dort die maximale elektrische Leistung der Pumpe erreicht wird. Dies führt jedoch dazu, dass in anderen Bereichen der Pumpenkennlinie mit maximaler Drehzahl die maximal zur Verfügung stehende elektrische Leistung des Antriebsmotors nicht ausgenutzt wird. Das heißt, es gibt Bereiche, in denen die maximal zur Verfügung stehende elektrische Leistung nicht vollständig in hydraulische Leistung des Pumpenaggregates umgesetzt werden kann. In diesen Bereichen ist es durch die übliche Steuerung des Frequenzumrichters nicht möglich, die Pumpendrehzahl weiter zu erhöhen, da bereits die maximale Spannung und/oder der maximale Lastzyklus des Frequenzumrichters erreicht sind. Das heißt, mit der herkömmlichen Pumpensteuerung lässt sich die maximale elektrische Leistung nicht über den gesamten Betriebsbereich der Pumpe ausnutzen.

US 6,965,212 B1 offenbart grundsätzlich den Betrieb eines elektrischen Antriebsmotors für verschiedene Einsatzzwecke, insbesondere in einem Flugzeug, unter Ausnutzung der Feldschwächung. Dabei soll durch die Feldschwächung die Leistung und der Wirkungsgrad erhöht werden.

US 5,240,380 offenbart eine Drehzahlsteuerung für Kreiselpumpen. Bei dieser ist jedoch die Pumpenkennlinie durch die maximale Drehzahl begrenzt, so dass es Bereiche gibt, in denen die maximal zur Verfügung stehende elektrische Leistung des Antriebsmotors nicht ausgenutzt werden kann.

Es ist daher Aufgabe der Erfindung, ein verbessertes Kreiselpumpenaggregat bereitzustellen, welches eine weitergehende Ausnutzung der maximal zur Verfügung stehenden elektrischen Leistung in allen Betriebsbereichen der Pumpe ermöglicht.

Diese Aufgabe wird durch ein Kreiselpumpenaggregat mit den im Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Kreiselpumpenaggregat weist einen elektrischen Antriebsmotor auf, welcher in bekannter Weise über eine Welle zumindest ein Laufrad eines Kreiselpumpenaggregates drehend antreiben kann. Darüber hinaus ist eine Steuereinrichtung zur Regelung bzw. Steuerung des Antriebsmotors vorgesehen. Diese Steuereinrichtung weist erfindungsgemäß einen Frequenzumrichter auf, über welchen die Drehzahl des Antriebsmotors und damit der Pumpe variabel ist. Grundsätzlich arbeitet diese Steuereinrichtung zunächst wie herkömmlichen Steuereinrichtungen. Diese herkömmlichen Steuereinrichtungen haben ein Regelschema, gemäß dem der Strom in Phase mit der induzierten Gegenspannung gehalten wird, d. h. der Lastwinkel ρ zwischen dem Strom und dem magnetischen Rotor wird im Wesentlichen bei 90° gehalten, da in diesem Regelzustand der höchste Wirkungsgrad des Antriebsmotors gegeben ist.

Um jedoch in denjenigen Bereichen, in welchen bei maximaler Drehzahl des Antriebsmotors, welche mit diesem dieser Regelstrategie erzielbar ist, die hydraulische Leistung des Pumpenaggregates weiter erhöhen zu können und so die elektrische Maximalleistung voll ausnutzen zu können, ist für diese Bereiche eine alternative Regelstrategie in der erfindungsgemäßen Steuereinrichtung vorgesehen. Erfindungsgemäß ist die Steuereinrichtung nämlich derart ausgebildet, dass in zumindest einem Steuerbereich eine Feldschwächung in dem Antriebsmotor erzeugt wird. Durch diese Feldschwächung kann bei gleicher Frequenz der Ausgangsspannung des Frequenzumrichters die Drehzahl des Antriebsmotors weiter erhöht werden. Das heißt in diesen Steuerbereichen wird es möglich, auch ohne Erhöhung der maximalen Ausgangsspannung, d. h. des maximalen Tastverhältnisses des Frequenzumrichters und der Frequenz der Ausgangsspannung des Frequenzumrichters, die Motordrehzahl weiter zu erhöhen. So wird es durch die Feldschwächung in dem Antriebsmotor möglich, die Drehzahl über die bei herkömmlicher Regelstrategie gegebene Maximaldrehzahl hinaus zu erhöhen. Durch Erhöhung der Maximaldrehzahl wird die hydraulische Leistung der angeschlossenen Kreiselpumpe erhöht.

Der Steuerbereich mit der Feldschwächung kommt in denjenigen Betriebsbereichen der Kreiselpumpe zum Einsatz, in welchen bei maximaler Drehzahl die maximal zur Verfügung stehende elektrische Antriebsleistung des Antriebsmotors noch nicht ausgeschöpft ist. In diesen Bereichen kann dann durch die Feldschwächung die Drehzahl idealerweise bis an die elektrische Leistungsgrenze heran erhöht werden, sodass es in allen Betriebsbereichen der Kreiselpumpe möglich wird, die maximale elektrische Anschlussleistung des Antriebsmotors auszunutzen und die somit maximal erzeugbare hydraulische Leistung zur Verfügung zu stellen.

Bei dem Antriebsmotor handelt es sich vorzugsweise um einen Permanentmagnetmotor, d. h. einen Motor mit einem Permanentmagnet-Rotor.

Die Steuereinrichtung ist vorzugsweise derart ausgebildet, dass die Feldschwächung dadurch erzeugt wird, dass der Lastwinkel ρ des Stroms gegenüber dem magnetischen Feld des Rotors über 90° hinaus vergrößert wird, sodass Strom und induzierte Gegenspannung nicht mehr in Phase sind. Das heißt, in diesem Steuerbereich, in dem die Feldschwächung zum Einsatz kommt, wird die in anderen Steuerbereichen, verwendete Regelstrategie, gemäß derer Strom und induzierte Gegenspannung in Phase sein sollen, verlassen.

Die Steuereinrichtung ist derart ausgebildet, dass der Steuerbereich, in welchen die Feldschwächung erzeugt wird, im Bereich geringen Durchflusses bei hohem Druck und/oder im Bereich eines hohen Durchflusses bei geringem Druck gelegen ist. Dies sind die Bereiche, in welchen bei herkömmlicher Motorregelung die hydraulische Leistung der Pumpe durch die Maximaldrehzahl begrenzt ist, gleichzeitig aber die maximal zur Verfügung stehende elektrische Antriebsleistung nicht voll ausgenutzt wird. Durch den Einsatz der Feldschwächung in diesen Bereichen, kann die Drehzahl des Antriebsmotors und somit der Kreiselpumpe über das sonst übliche Maximum hinaus erhöht werden und so die hydraulische Leistung weiter erhöht werden bis idealerweise die maximale elektrische Anschlussleistung des Antriebsmotors voll ausgenutzt wird.

Erfindungsgemäß wird es somit möglich, ein Kreiselpumpenaggregat bereitzustellen, welches in einzelnen Betriebsbereichen, nämlich insbesondere in den Bereichen geringen Durchflusses und hohem Druckes sowie hohen Durchflusses bei geringem Druck eine größere hydraulische Leistung bereitstellt, ohne die maximale elektrische Anschlussleistung des Antriebsmotors bzw. des Kreiselpumpenaggregates erhöhen zu müssen.

Bevorzugt ist die Steuereinrichtung somit derart ausgebildet, dass die Feldschwächung so eingesetzt wird, dass auch im Bereich geringen Durchflusses die maximale elektrische Leistung des Pumpenaggregates nutzbar ist.

Erfindungsgemäß ist in der Steuereinrichtung des Antriebsmotors dem Frequenzumrichter ein Spannungswandler vorgeschaltet, über welchen eine dem Frequenzumrichter zugeführte Zwischenspannung veränderbar ist. Herkömmlicherweise wird dem Frequenzumrichter eine feste Zwischen- bzw. Eingangsspannung zugeführt und die Ausgangsspannung des Frequenzumrichters wird durch Änderung des Tastverhältnisses geändert, wobei bei maximalem Tastverhältnis, d. h. einem Tastverhältnis nahe 1, in der Praxis etwa 0,97, die Ausgangsspannung des Frequenzumrichters nahezu der Eingangsspannung entspricht. Bei verringertem Tastverhältnis, welches zum Erzielen einer verringerten Ausgangsspannung des Frequenzumrichters notwendig ist, erhöhen sich im Frequenzumrichter die Schaltverluste. Dies in den Teilen des Pumpenkennfeldes der Fall, in welchen nicht die maximale Drehzahl sondern eine verringerte Drehzahl des Kreiselpumpenaggregates gefordert ist, weil nicht der maximale Druck und/oder der maximale Durchfluss gefordert sind.

Durch die Anordnung eines Spannungswandlers eingangsseitig des Frequenzumrichters ist es nun möglich, die genannten Schaltverluste des Frequenzumrichters zu minimieren, da es möglich ist, die Ausgangs-spannung des Frequenzumrichters zu reduzieren, ohne das Tastverhältnis verringern zu müssen. Vielmehr wird die Ausgangsspannung des Frequenzumrichters mit dieser Steuereinrichtung in der Weise reduziert, dass die Eingangsspannung des Frequenzumrichters in bestimmten Betriebsbereichen reduziert wird. Dazu ist der Spannungswandler von der Steuereinrichtung derart ansteuerbar, dass er eine reduzierte Zwischenspannung erzeugt, welche dem Frequenzumrichter als Eingangsspannung zugeführt wird. Das heißt, der Spannungswandler ermöglicht es, dass dem Frequenzumrichter nicht eine feste Eingangsspannung, beispielsweise die Netzanschlussspannung zugeführt werden muss, sondern die Eingangsspannung des Frequenzumrichters durch den Spannungswandler variiert werden kann, um somit auch die Ausgangsspannung des Frequenzumrichters, welche dem Antriebsmotor zugeführt wird, zu verändern und gleichzeitig das Tastverhättnis des Frequenzumrichters bei dem maximal möglichen Wert zu halten. So werden Schaltverluste im Frequenzumrichter minimiert.

Der verwendete Spannungswandler ist vorzugsweise ein AC-DC-Wandler (Wechselspannungs-Gleichspannungs-Wandler) oder ein DC-DC-Wandler (Gleichspannungs-Gleichspannungs-Wandler) mit veränderbarer Ausgangsspannung. So kann die Ausgangsspannung geändert werden, um dem Frequenzumrichter zum Erzeugen einer bestimmten Ausgangsspannung eine gewünschte Eingangsspannung zuführen zu können. Ob es sich bei dem Spannungswandler um einen AC-DC-Wandler oder einen DC-DC-Wandler handelt, hängt davon ab, welche Eingangsspannung dem System, d. h. der Steuereinrichtung zugeführt wird. Dies kann Netzspannung, d. h. Wechselspannung sein oder aber auch eine Gleichspannung, wenn beispielsweise noch ein vorgeschalteter Gleichrichter vorgesehen ist, oder das Presspumpenaggregat an Gleichspannung betrieben werden soll.

Bei dem Spannungswandler kann es sich um einen Aufwärtswandler (Boost-Converter) und/oder ein Abwärtswandler (Buck-Converter) handeln. Je nach Eingangsspannung des Spannungswandlers und dem Bereich von Eingangsspannungen, mit welchem der Frequenzumrichter betrieben werden soll, kann der Spannungswandler so gewählt sein, dass er die Eingangsspannung erhöht oder verringert. Alternativ kann auch ein Spannungswandler vorgesehen sein, welcher die Spannung gegenüber der Eingangsspannung sowohl erhöhen als auch verringern kann (Buck-Boost-Converter).

Vorzugsweise ist zwischen den Ausgangspolen des Spannungswandlers zumindest ein Kondensator angeordnet, über welchem es zu Potentialabfall der Zwischenspannung kommt.

Die Steuereinrichtung ist derart ausgebildet, dass in einem ersten Steuerbereich die Ausgangsspannung des Frequenzumrichters durch Veränderung der Zwischenspannung verändert wird, während der Frequenzumrichter mit maximalem Tastverhältnis für seine Ausgangsspannung betrieben wird. Dies ist derjenige Steuerbereich, in welchem die Zwischenspannung durch den dem Frequenzumrichter vorgeschalteten Spannungswandler veränderbar ist, insbesondere gegenüber der Eingangsspannung des Spannungswandlers verringerbar ist, um dem Frequenzumrichter eine verringerte Eingangsspannung zuzuführen. Auf diese Weise kann dann auch die Ausgangsspannung des Frequenzumrichters verändert, insbesondere verringert werden. Gleichzeitig bleibt das Tastverhältnis unverändert maximal, sodass die Schaltverluste gering gehalten werden. Das maximale Tastverhältnis liegt idealerweise bei 1, in der Praxis ist dies jedoch in der Regel nicht ganz erreichbar, in der Praxis wird das maximale Tastverhältnis bei etwa 0,97 liegen, um eine Regelreserve zu behalten und das Gesamtsystem stabil steuern zu können.

Weiter bevorzugt ist die Steuereinrichtung derart ausgebildet, dass in einem zweiten Steuerbereich die Ausgangsspannung des Frequenzumrichters durch Reduzierung des Tastverhältnisses des Frequenzumrichters verändert wird, während die Zwischenspannung vorzugsweise auf eine feste Minimalspannung oder eine Minimalspannung mit vorbestimmten Verhältnis zur Netzspannung eingestellt ist. Dies ist in der Regel, die minimale von dem Spannungswandler erzeugbare Ausgangsspannung. Wenn nun zur Regelung des Antriebsmotors, beispielsweise zur weiteren Reduzierung von Druck und Durchfluss des Pumpenaggregates die Eingangsspannung des Antriebsmotors weiter reduziert werden soll, muss dann dazu das Tastverhältnis des Frequenzumrichters reduziert werden. Dies ist insbesondere ein Bereich, in welchem die Zwischenspannung, welche von dem Spannungswandler erzeugt wird, nicht weiter reduziert werden kann. Das Minimum der Zwischenspannung kann beispielsweise dadurch vorgegeben sein, dass bei weiterer Reduzierung der Zwischenspannung unerwünschte anschlussseitige Störungen an den Netzanschluss des Kreiselpumpenaggregates abgegeben werden würden.

Die Steuereinrichtung ist weiter bevorzugt derart ausgebildet, dass der erste Steuerbereich, in welchem die Ausgangsspannung des Frequenzumrichters durch Veränderung einer dem Frequenzumrichter zugeführten Zwischenspannung variiert wird, ein Bereich hoher Leistung des Pumpenaggregates ist. Der zweite Steuerbereich, in welchem dann das Tastverhältnis des Frequenzumrichters bei minimaler Zwischenspannung verändert wird, ist idealerweise ein Steuerbereich, mit geringerer Leistung als in dem ersten Steuerbereich. Das heißt, wenn die hydraulische Leistung des Pumpenaggregates weiter verringert werden soll, d. h. Druck und/oder Durchfluss weiter verringert werden sollen, als dies in dem ersten Steuerbereich möglich ist, wendet die Steuereinrichtung den zweiter Steuerbereich an.

Weiter bevorzugt ist die Steuereinrichtung derart ausgebildet, dass der Steuerbereich in welchem die Feldschwächung, wie sie oben beschrieben wurde, erzeugt wird, ein dritter Steuerbereich ist, in welchem die Zwischenspannung von dem Spannungswandler vorzugsweise auf ihren Maximalwert eingestellt ist. Dieser dritte Steuerbereich ist dann idealerweise, wie oben beschrieben, ein Bereich, in welchem der Druck oder der Durchfluss über das in dem ersten Steuerbereich erreichbare Maximum, d. h. über die normal erreichbare Maximaldrehzahl hinaus erhöht werden können, um die maximale elektrische Anschlussleistung des Antriebsmotors auszunutzen. In diesem Bereich ist dann der Spannungswandler von der Steuereinrichtung so eingestellt, dass die Zwischenspannung ihren Maximalwert erreicht. Gleichzeitig ist auch das Tastverhältnis des Frequenzumrichters in diesem Steuerbereich auf das Maximum eingestellt.

Das erfindungsgemäße Kreiselpumpenaggregat kann vorzugsweise als Heizungsumwälzpumpenaggregat, Pumpenaggregat für Klimaanlagen, Pumpenaggregat für solarthermische Anwendungen oder als Hochdruckpumpenaggregat ausgestaltet sein. Für alle diese Arten von Kreiselpumpenaggregaten ist der erweiterte Steuer- bzw. Regelbereich, welcher sich durch Verwendung der Feldschwächung und/oder eine reduzierte Zwischenspannung, welche dem Frequenzumrichter zugeführt wird, ergibt, von Vorteil.

Nachfolgend wird die Erfindung beispielhaft anhand der beigefügten Figuren beschrieben. In diesen zeigt:
- Fig. 1: ein HQ-Diagramm eines erfindungsgemäßen Kreiselpum- penaggregates,
- Fig. 2: ein PQ-Diagramm eines erfindungsgemäßen Kreiselpum- penaggregates,
- Fig. 3: ein Zeigerdiagramm für den Betrieb des Antriebsmotors in einem ersten Steuerbereich,
- Fig. 4: ein Zeigerdiagramm für den Betrieb des Antriebsmotors in einem zweiten Steuerbereich,
- Fig. 5: ein Zeigerdiagramm für den Betrieb des Antriebsmotors in einem dritten Steuerbereich, und
- Fig. 6 -8: Prinzipschaltpläne für drei mögliche Anordnungen eines Spannungswandlers im Zwischenkreis.

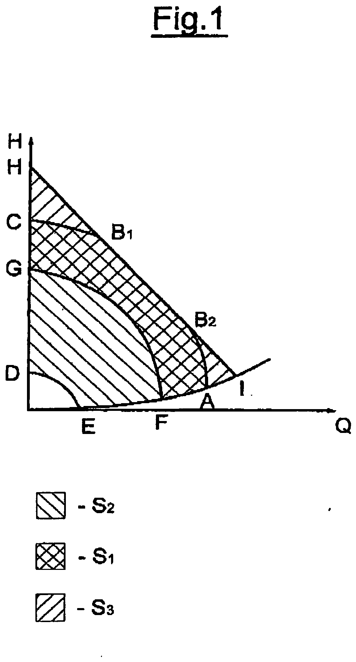

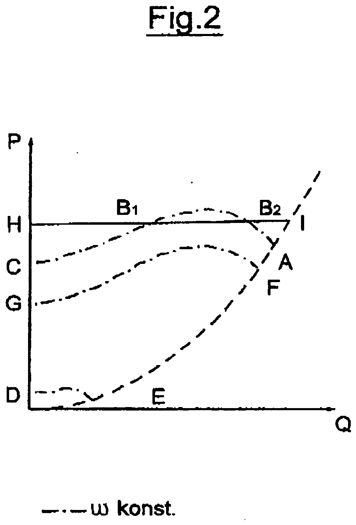

Anhand der Fig. 1 und 2 werden die grundsätzlichen Steuer- bzw. Regelbereiche eines erfindungsgemäßen Kreiselpumpenaggregates erläutert. Dabei zeigt Fig. 1 ein HQ (Druck-Durchfluss)-Diagramm eines erfindungsgemäßen Kreiselpumpenaggregates und Fig. 2 ein PQ (Leistungs-Durchfluss) Diagramm. P ist dabei die elektrische Eingangsleistung. In Fig. 2 zeigen die strichpunktierten Linien die Kurven konstanter Drehzahl ω konst. Bei üblicher Steuerung des Antriebsmotors mittels eines Frequenzumrichters wäre das Betriebsfeld des Pumpenaggregates im HQ-Diagramm durch die Linie CB₁B₂A begrenzt. Dies ist die Linie maximaler Drehzahl in den Bereichen CB₁ und B₂A. Zwischen B₁ und B₂ ist das Kennfeld durch die maximale elektrische Anschlussleistung begrenzt, wie in Fig. 2 zu erkennen ist. Die maximale Drehzahl ist bei herkömmlicher Steuerung durch die maximale Ausgangsspannung sowie das maximale Tastverhältnis des Frequenzumrichters begrenzt. Herkömmlich erfolgt die Regelung dabei so, dass der Strom in Phase mit der induzierten Gegenspannung (back EMF) gehalten wird, d. h. der Lastwinkel ρ zwischen Strom und magnetischem Feld λ des Rotors 90° beträgt.

Im Vergleich von Fig. 1 und 2 ist zu erkennen, dass es in diesem Feld Bereiche gibt, in welchen die maximale Anschlussleistung nicht voll in hydraulische Leistung umgesetzt werden kann. Die Bereiche HC B₁ und AB₂I werden bei herkömmlicher Steuerung des Antriebsmotors mittels Frequenzumrichter nicht ausgenutzt. Das heißt, in diesen Bereichen kann die zur Verfügung stehende elektrische Anschlussleistung nicht voll in hydraulische Leistung umgesetzt werden.

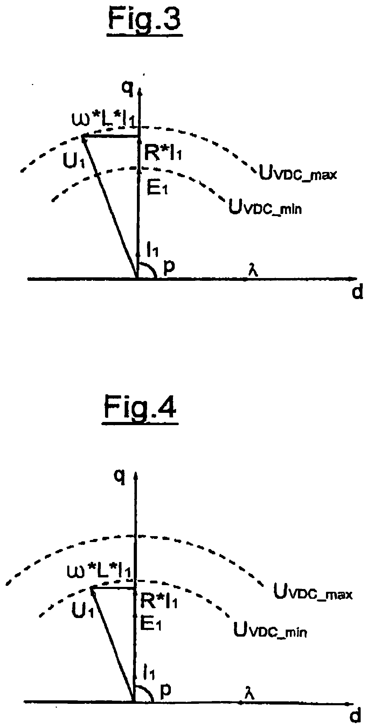

In diesen Bereichen lässt sich jedoch die Drehzahl mittels herkömmlicher Steuerung nicht einfach erhöhen, die hydraulische Leistung ist grundsätzlich proportional zu dem Produkt der q-Achsen-Komponente der induzierten Gegenspannung E₁ und den Phasenstrom I₁ (siehe Zeigerdiagramm in Fig. 3). Um diese hydraulische Leistung und damit die elektrische Eingangsleistung erhöhen zu können, müsste das Produkt von E₁ und I₁ erhöht werden. In den Bereichen B₁ CH und B₂ IA des HQ- bzw. PQ-Diagramms müsste die Drehzahl weiter erhöht werden. Bei einem Motor mit Permanentmagnetrotor entspricht dies einer Erhöhung der Komponente E₁ der induzierten Gegenspannung E₁. Mit der herkömmlichen Regelstrategie, bei welcher E₁ und Phasenstrom I₁ in Phase sind, kann E₁ jedoch nicht erhöht werden, da, wie in Fig. 3 zu sehen ist, dazu die Phasenspannung U₁ erhöht werden müsste. Diese entspricht jedoch schon der maximalen Zwischenspannung U_{VDC-Max}. U_{VDC-max} ist die maximale Zwischenspannung, d. h. die maximale Eingangsspannung des Frequenzumrichters. Bei maximalem Tastverhältnis des Frequenzumrichters lässt sich diese Spannung nicht weiter erhöhen.

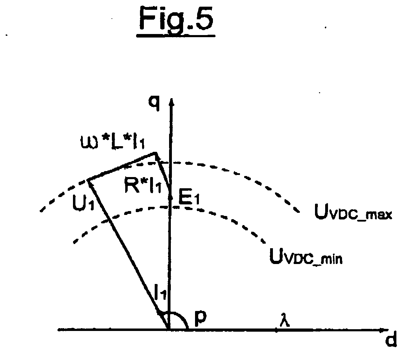

Insofern ist zu erkennen, dass mit der herkömmlichen Steuercharakteristik die genannten ungenutzten Bereiche des HQ-Diagrammes nicht ausgenutzt werden können. Erfindungsgemäß werden diese Bereiche nun als dritter Steuerbereich S₃ ebenfalls genutzt, d. h. es ist möglich, in den Bereichen E₁ CH und B₂ IA die hydraulische Leistung der Pumpe bis an die durch die maximale elektrische Anschlussleistung vorgegebene Grenze HI zu erhöhen. Um dies zu erreichen, ist die Steuereinrichtung des erfindungsgemäßen Kreiselpumpenaggregates derart ausgebildet, dass sie in dem dritten Steuerbereich S₃ eine Feldschwächung des Antriebsmotors bewirkt. Diese Feldschwächung wird dadurch erzeugt, dass die Steuereinrichtung den Phasenstrom I₁ derart steuert, das er nicht mehr in Phase mit der induzierten Gegenspannung E₁ ist. Das heißt, die Steuereinrichtung vergrößert den Lastwinkel ρ zwischen Rotormagnetfeld λ und Phasenstrom I₁ über 90° hinaus. Im Zeigerdiagramm gemäß Fig. 5, welches diesen dritten Steuerbereich zeigt, ist zu erkennen, dass dadurch die q-Achsen-Komponente der induzierten Gegenspannung E₁ gegenüber dem ersten Steuerbereich S₁, welche in dem Zeigerdiagramm gemäß Fig. 3 gezeigt ist, erhöht werden kann. Dadurch erhöht sich auch die Drehzahl des Antriebsmotors, ohne, dass die Spannung U₁ über das Maximum U_{VDC_max} hinaus erhöht werden muss.

Es ist somit zu erkennen, dass durch die Feldschwächung, welche in dem dritten Steuerbereich S₃ zum Einsatz kommt, in allen Betriebsbereichen des Kreiselpumpenaggregates die maximale hydraulische Leistung, welche bei gegebener maximaler elektrischer Anschlussleistung erzielt werden kann, zur Verfügung steht. Das heißt gegenüber herkömmlicher Steuerung kann insbesondere im Bereich kleinen Durchflusses Q der Druck H weiter erhöht werden und darüber hinaus kann im Bereich niedrigen Drucks H der Durchfluss Q über das bislang übliche Maß hinaus erhöht werden.

Bei einer besonders bevorzugten Ausführungsform der Erfindung wird in einem zweiten Steuerbereich S₂, welcher sich an den Bereich maximaler hydraulischer Leistung beim verringerter hydraulischer Leistung anschließt, die Ausgangsspannung des Frequenzumrichters dadurch reduziert, dass die dem Frequenzumrichter zugeführte Zwischenspannung über einen Spannungswandler reduziert wird. Dieser zweite Steuerbereich ist der Bereich, welche in den Diagrammen gemäß Fig. 1 und 2 durch die Punkte A, B₂, B₁, C, G und F begrenzt ist. In diesem Bereich ist die zuvor beschriebene Feldschwächung ausgeschaltet, d. h. der Lastwinkel ρ zwischen magnetischen Fluss λ und Strom I₁ ist 90°. In diesem zweiten Steuerbereich wird die Zwischenspannung U_{VDC} zwischen U_{VDC_min} und U_{VDC_max} (siehe Zeigerdiagramme gemäß Fig. 3 bis 5) durch einen dem Frequenzumrichter vorgeschalteten Spannungswandler variiert.

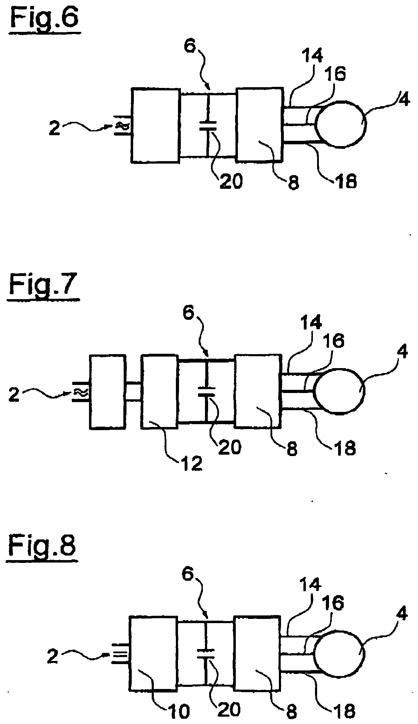

Mögliche Anordnungen eines solchen Spannungswandlers sind in den Fig. 6 bis 8 gezeigt. Den drei Ausführungsbeispielen gemäß Fig. 6 bis 8 ist gemeinsam, dass zwischen einem Netzanschluss 2 und einem Antriebsmotor 4 des Kreiselpumpenaggregates eine Steuereinrichtung 6 angeordnet ist. Die Steuereinrichtung 6 weist als wesentliche Komponente einen Frequenzumrichter 8 auf, welche die Frequenz der im Antriebsmotor 4 zugeführten Spannung variiert, um die Drehzahl des Antriebsmotors 4 zu verändern. Der Antriebsmotor 4 ist als permanentmagnetischer Synchronmotor ausgebildet, im vorliegenden Fall als DreiPhasen-Motor.

Die Steuereinrichtung 6 weist zwischen Netzanschluss 2 und Frequenzumrichter 8 darüber hinaus einen Zwischenkreis auf, in welchem ein Spannungswandler 10 angeordnet ist. Bei den Ausführungsformen gemäß Fig. 6 und 7 ist der Spannungswandler 10 ein AC-DC-Wandler. Das heißt der Netzanschluss 2 wird an eine Wechselspannung, üblicherweise 230 Volt Wechselspannung angeschlossen. Der Spannungswandler 10 wandelt diese Spannung in eine Gleichspannung um. Gemäß Fig. 6 ist der Spannungswandler 10 als Abwärtssteller ausgebildet, welche eine veränderliche Ausgangsspannung abgeben kann, sodass die Zwischenspannung ausgangsseitig des Spannungswandlers 10 zwischen U_{VDC_min} und U_{VDC_max} von der Steuereinrichtung 6 variiert werden kann. Auf diese Weise kann die Ausgangsspannung des Frequenzumrichters 8 ohne Änderung des Tastverhältnisses des Frequenzumrichters verringert werden.

Bei dem Ausführungsbeispiel gemäß Fig. 7 ist dem Spannungswandler 10 ein zweiter Spannungswandler 12 nachgeschaltet. Bei dieser Ausführungsform erzeugt der Spannungswandler 10 eine konstante Gleichspannung als Ausgangsspannung, welche dann von einem nachgeschaltetem Spannungswandler 12, vorzugsweise einem Abwärtssteller, variiert werden kann, um dem Frequenzumrichter 8 wie beschrieben eine veränderliche Eingangsspannung zuzuführen.

Das dritte Ausführungsbeispiel gemäß Fig. 8 weist wiederum nur einen Spannungswandler 10 auf, welcher in diesem Fall jedoch als Gleichspannungswandler ausgestaltet ist. Hier wird der Netzanschluss 2 mit einer Gleichspannung verbunden. Der Spannungswandler 10, welcher hier vorzugsweise auch als Abwärtssteller ausgebildet ist, verändert dann diese Spannung so, dass dem Frequenzumrichter 8 eine veränderliche Eingangsspannung zugeführt werden kann.

Der Frequenzumrichter stellt die Spannung dann in der gewünschten Frequenz ein und führt diese den drei Phasen 14, 16, 18 des Antriebsmotors 4 zu, wobei die drei Phasen 14, 16, 18 in bekannter Weise phasenverschoben angesteuert werden, um die gewünschte Drehung des Antriebsmotors zu erzeugen.

Bei den Ausführungsformen gemäß Fig. 6 und 8 kann der Spannungswandler 10 ein Abwärts- oder Aufwärtssteller oder aber auch ein kombinierter Aufwärts-/Abwärtssteller (Buck-Boost-Converter) sein. Das gleiche gilt für den Spannungswandler 12 in dem Ausführungsbeispiel gemäß Fig. 7. Bevorzugt werden die Spannungswandler 10 in den Ausführungsbeispielen gemäß Fig. 6 und 8 und der Spannungswandler 12 in dem Ausführungsbeispiel gemäß Fig. 7 von der Steuereinrichtung so gesteuert, dass sie eine Zwischen- bzw. Ausgangsspannung erzeugen, welche in einem vorgegebenen, einstellbaren Verhältnis zu der Netz- bzw. Eingangsspannung steht.

Bei allen drei Ausführungsbeispielen lässt sich die Zwischenspannung U_{VDC}, welche dem Frequenzumrichter 8 als Eingangsspannung zugeführt wird, nur auf ein vorgegebenes Minimum U_{VDC_min} absenken. Aus diesem Grunde wird in dem Betriebsbereich des Kreiselpumpenaggregates, welcher in den Fig. 1 und 2 durch die Punkte G, F, E, D begrenzt ist, und einen zweiten Steuerbereich S₂ bildet, der Frequenzumrichter 8 von der Steuereinrichtung 6 derart gesteuert, dass bei minimaler Eingangsspannung U_{VDC_min} die Spannung weiter durch Veränderung des Tastverhältnisses des Frequenzumrichters verringert wird.

Erfindungsgemäß gibt es somit drei Steuerbereiche S₁, S₂ und S₃, welche den gesamten Betriebsbereich des Kreiselpumpenaggregates, wie in dem Diagrammen gemäß Fig. 1 und 2 gezeigt ist, abdecken. Im ersten Steuerbereich S₁ wird der Frequenzumrichter 8 mit konstantem maximalen Tastverhältnis betrieben und über einen Spannungswandler die zugeführte Zwischenspannung U_{VDC} verändert. In einem zweiten Steuerbereich S₂ wird bei konstanter minimaler Zwischenspannung U_{VDC} nun das Tastverhältnis des Frequenzumrichters verändert, d. h. gegenüber dem ersten Steuerbereich S₁ reduziert. In einem dritten Steuerbereich S₃ ist wiederum das Tastverhältnis des Frequenzumrichters 8 maximal und gleichzeitig die Zwischenspannung U_{VDC} maximal. In diesem Bereich kommt die oben beschriebene Feldschwächung des Antriebsmotors zum Einsatz, sodass in diesem Steuerbereich S₃ die Drehzahl ω des Antriebsmotors und des Kreiselpumpenaggregates über das bei herkömmlicher Steuerung übliche Maximum hinaus erhöht werden kann.

### Bezugszeichenliste

- 2: - Netzanschluss
- 4: - Motor
- 6: - Steuereinrichtung
- 8: - Frequenzumrichter
- 10, 12: - Spannungswandler
- 14, 16, 18: - Phasen des Motors 4
- 20: - Kondensator
- S1, S2, S3: - Steuerbereiche
- B: - Leistung
- Q: - Durchfluss
- H: - Druck
- U_{VDC}: - Zwischenspannung
- ρ: - Lastwinkel
- λ: - Magnetischer Fluss
- I: - Strom
- U: - Spannung
- E: - Induzierte Gegenspannung (Back-Electromagnetic- Force)
- ω: - Drehzahl
- L: - Induktivität

## Patentansprüche

1. Kreiselpumpenaggregat mit einem elektrischen Antriebsmotor (4) und einer einen Frequenzumrichter (8) aufweisenden Steuereinrichtung (6) zur Drehzahlsteuerung des Antriebsmotors (4),
**dadurch gekennzeichnet, dass**
die Steuereinrichtung (6) derart ausgebildet ist, dass in einem Steuerbereich (S₃), welcher im Bereich geringen Durchflusses (Q) bei hohem Druck (H) und/oder im Bereich eines hohen Durchflusses (Q) bei geringem Druck (H) gelegen ist und in welchem bei herkömmlicher Motorregelung die hydraulische Leistung durch die Maximaldrehzahl begrenzt ist, eine Feldschwächung in dem Antriebsmotor (4) erzeugt wird, durch welche die Drehzahl des Antriebsmotors (4) erhöht wird,
dass in der Steuereinrichtung (6) dem Frequenzumrichter (8) ein Spannungswandler (10, 12) vorgeschaltet ist, über welchen eine dem Frequenzumrichter zugeführte Zwischenspannung (U_{VDC}) veränderbar ist
und dass die Steuereinrichtung (6) derart ausgebildet ist, dass in einem ersten Steuererbereich (S₁) die Ausgangsspannung des Frequenzumrichters (8) durch Veränderung der Zwischenspannung (U_{VDC}) verändert wird, während der Frequenzumrichter (8) mit maximalem Tastverhältnis für seine Ausgangsspannung betrieben wird.

2. Kreiselpumpenaggregat nach Anspruch 1, **dadurch gekennzeichnet, dass** der Antriebsmotor (4) einen Permanentmagnet-Rotor aufweist.

3. Kreiselpumpenaggregat nach Anspruch 1 oder 2, **dadurch gekennzeichnet, dass** die Steuereinrichtung (6) derart ausgebildet ist, dass die Feldschwächung dadurch erzeugt wird, dass der Lastwinkel (ρ) des Stroms gegenüber dem magnetischen Feld (2) des Rotors über 90° hinaus vergrößert wird, so dass Strom (I₁) und induzierte Gegenspannung (E₁) nicht mehr in Phase sind.

4. Kreiselpumpenaggregat nach einem der vorangehenden Ansprüche, **dadurch gekennzeichnet, dass** die Steuereinrichtung (6) derart ausgebildet ist, dass die Feldschwächung so eingesetzt wird, dass auch im Bereich geringen Durchflusses (Q) die maximale elektrische Leistung (ρ) des Kreiselpumpenaggregates nutzbar ist.

5. Kreiselpumpenaggregat nach einem der vorangehenden Ansprüche, **dadurch gekennzeichnet, dass** der Spannungswandler (10, 12) ein AC-DC Wandler oder ein DC-DC- Wandler mit veränderbarer Ausgangsspannung (U_{VDC}) ist.

6. Kreiselpumpenaggregat nach einem der vorangehenden Ansprüche, **dadurch gekennzeichnet, dass** der Spannungswandler (10, 12) ein Aufwärtswandler und/oder ein Abwärtswandler ist.

7. Kreiselpumpenaggregat nach einem der vorangehenden Ansprüche, **dadurch gekennzeichnet, dass** zwischen den Ausgangspolen des Spannungswandlers (10, 12) zumindest ein Kondensator (20) angeordnet ist.

8. Kreiselpumpenaggregat nach einem der vorangehenden Ansprüche, **dadurch gekennzeichnet, dass** die Steuereinrichtung (6) derart ausgebildet ist, dass in einem zweiten Steuerbereich (S₂) die Ausgangsspannung des Frequenzumrichters (8) durch Reduzierung des Tastverhältnisses des Frequenzumrichters (8) verändert wird, während die Zwischenspannung (U_{VDC}) vorzugsweise auf eine feste Minimalspannung (U_{VDC_min}) oder eine Minimalspannung (U_{VDC_min}) mit vorbestimmten Verhältnis zur Netzspannung (2) eingestellt ist.

9. Kreiselpumpenaggregat nach einem der vorangehenden Ansprüche, **dadurch gekennzeichnet, dass** die Steuereinrichtung (6) derart ausgebildet ist, dass der erste Steuerbereich (S₁) ein Bereich hoher Leistung des Pumpenaggregates ist.

10. Kreiselpumpenaggregat nach einem der vorangehenden Ansprüche, **dadurch gekennzeichnet, dass** die Steuereinrichtung derart ausgebildet ist, dass der Steuerbereich (S₃), in welchem die Feldschwächung erzeugt wird ein dritter Steuerbereich (S₃) ist, in welchem die Zwischenspannung (U_{VDC}) von dem Spannungswandler (10, 12) vorzugsweise auf ihren Maximalwert (U_{VDC_max}) eingestellt ist.

11. Kreiselpumpenaggregat nach einem der vorangehenden Ansprüche, **dadurch gekennzeichnet, dass** es sich um ein Heizungsumwälzpumpenaggregat, ein Pumpenaggregat für Klimaanlagen, ein Pumpenaggregat für solarthermische Anwendungen oder ein Hochdruckpumpenaggregat handelt.

## Claims

1. A centrifugal pump assembly with an electric drive motor (4) and with a control device (6) having a frequency converter (8), for the control of the rotational speed of the drive motor (4) **characterised in that**
the control device (6) is designed in a manner such that in a control region (S₃) which is situated in the region of a low throughput (Q) at a high pressure (H) and/or in the region of a high throughput (Q) at a low pressure (H) and in which, with a conventional motor closed-loop control, the hydraulic power is limited by the maximum rotational speed, a field weakening is produced in the drive motor (4), by way of which the rotational speed of the drive motor (4) is increased,
that a voltage converter (10, 12) is connected in series in front of the frequency converter (8) in the control device (6), via which converter an intermediate voltage (U_{VDC}) supplied to the frequency converter can be changed
and that the control device (6) is designed in a manner such that in a first control region (S₁), the output voltage of the frequency converter (8) is changed by way of changing the intermediate voltage (U_{VDC}), whilst the frequency converter (8) is operated with a maximum make-to-break ratio for its output voltage.

2. A centrifugal pump assembly according to claim 1, **characterised in that** the drive motor (4) has a permanent magnet rotor.

3. A centrifugal pump assembly according to claim 1 or 2, **characterised in that** the control device (6) is designed in a manner such that the field weakening is produced by way of the load angle (ρ) of the current with respect to the magnetic field (2) of the rotor being increased beyond 90°, so that the current (I₁) and the induced back voltage (E₁) are no longer in phase.

4. A centrifugal pump assembly according to one of the preceding claims, **characterised in that** the control device (6) is designed in a manner such that the field weakening is applied such that the maximum electrical power (p) of the centrifugal pump assembly can be utilised also in the region of a low throughput (Q).

5. A centrifugal pump assembly according to one of the preceding claims, **characterised in that** the voltage converter (10, 12) is an AC-DC converter or a DC-DC converter with a changeable output voltage (UVDC).

6. A centrifugal pump assembly according to one of the preceding claims, **characterised in that** the voltage converter (10, 12) is a boost-converter and/or a buck-converter.

7. A centrifugal pump assembly according to one of the preceding claims, **characterised in that** at least one capacitor (20) is arranged between the output poles of the voltage converter (10, 12).

8. A centrifugal pump assembly according to one of the preceding claims, **characterised in that** the control device (6) is designed in a manner such that in a second control region (S₂), the output voltage of the frequency converter (8) is changed by way of reducing the make-to-break ratio of the frequency converter (8), whilst the intermediate voltage (U_{VDC}) is preferably set to a fixed minimal voltage (U_{VDC_min}) or a minimal voltage (U_{VDC_min}) with a predefined ratio to the mains voltage (2).

9. A centrifugal pump assembly according to one of the preceding claims, **characterised in that** the control device (6) is designed in a manner such that the first control region (S₁) is a region of a high power of the pump assembly.

10. A centrifugal pump assembly according to one of the preceding claims, **characterised in that** the control device is designed in a manner such that the control region (S₃), in which the field weakening is produced, is a third control region (S₃), in which the intermediate voltage (U_{VDC}) is set by the voltage converter (10, 12), preferably to its maximum value (U_{VDC_max}).

11. A centrifugal pump assembly according to one of the preceding claims, **characterised in that** it is the case of a heating circulation pump assembly, a pump assembly for air conditioning installations, a pump assembly for solar-thermal applications or a high-pressure pump assembly.

## Revendications

1. Groupe motopompe centrifuge comprenant un moteur d'entraînement électrique (4) et un dispositif de commande (6) qui possède un convertisseur de fréquence (8) pour la commande de la vitesse de rotation du moteur d'entraînement (4), **caractérisé en ce que**
le dispositif de commande (6) est construit de telle sorte que, dans une plage de commande (S₃) qui est située dans la plage de faible débit (Q) à haute pression (H) et/ou dans la plage de grand débit (Q) à basse pression (H) et dans laquelle, en cas de réglage traditionnel du moteur, la performance hydraulique est limitée par la vitesse de rotation maximale, un affaiblissement du champ est produit dans le moteur d'entraînement (4) sous l'effet duquel la vitesse de rotation du moteur d'entraînement (4) est augmentée, dans le dispositif de commande (6), est connecté, en amont du convertisseur de fréquence (8), un convertisseur de tension (10, 12) au moyen duquel il est possible de modifier une tension intermédiaire (U_{VDC}) amenée au convertisseur de fréquence et
le dispositif de commande (6) est construit de telle sorte que, dans une première plage de commande (S₁), la tension de sortie du convertisseur de fréquence (8) soit modifiée par modification de la tension intermédiaire (U_{VDC}) tandis que le convertisseur de fréquence (8) travaille avec le facteur d'utilisation des impulsions maximum pour sa tension de sortie.

2. Groupe motopompe centrifuge selon la revendication 1, **caractérisé en ce que** le moteur d'entraînement (4) possède un rotor à aimant permanent.

3. Groupe motopompe centrifuge selon la revendication 1 ou 2, **caractérisé en ce que** le dispositif de commande (6) est construit de telle sorte que l'affaiblissement du champ soit produit par le fait que l'angle de charge (ρ) du courant par rapport au champ magnétique (2) du rotor est porté au-delà de 90°, de sorte que le courant (I₁) et la contre-tension induite (E₁) ne soient plus en phase.

4. Groupe motopompe centrifuge selon l'une des revendications précédentes, **caractérisé en ce que** le dispositif de commande (6) est construit de telle sorte que l'affaiblissement du champ soit mis en œuvre de telle sorte que la puissance électrique maximale (ρ) du groupe motopompe centrifuge soit utilisable même dans la plage de faible débit (Q).

5. Groupe motopompe centrifuge selon l'une des revendications précédentes, **caractérisé en ce que** le convertisseur de tension (10, 12) est un convertisseur alternatif-continu (AC-DC) ou un convertisseur continu-continu (DC-DC) à tension de sortie variable (U_{VDC}).

6. Groupe motopompe centrifuge selon l'une des revendications précédentes, **caractérisé en ce que** le convertisseur de tension (10, 12) est un convertisseur élévateur de tension et/ou un convertisseur abaisseur de tension.

7. Groupe motopompe centrifuge selon l'une des revendications précédentes, **caractérisé en ce qu'**au moins un condensateur (20) est intercalé entre les pôles de sortie du convertisseur de tension (10, 12).

8. Groupe motopompe centrifuge selon l'une des revendications précédentes, **caractérisé en ce que** le dispositif de commande (6) est construit de telle sorte que, dans une deuxième plage de commande (S₂), la tension de sortie du convertisseur de fréquence (8) soit modifiée par réduction du facteur d'utilisation des impulsions du convertisseur de fréquence (8), tandis que la tension intermédiaire (U_{VCD}) est de préférence réglée sur une tension minimale fixe (U_{VDC_min})ou sur une tension minimale (U_{VDC_min}) qui est dans un rapport prédéterminé par rapport à la tension du réseau (2).

9. Groupe motopompe centrifuge selon l'une des revendications précédentes, **caractérisé en ce que** le dispositif de commande (6) est construit de telle sorte que la première plage de commande (S₁) soit une plage de grande puissance du groupe pompe.

10. Groupe motopompe centrifuge selon l'une des revendications précédentes, **caractérisé en ce que** le dispositif de commande est construit de telle sorte que la plage de commande (S₃) dans laquelle l'affaiblissement de champ est produit soit une troisième plage de commande (S₃) dans laquelle la tension intermédiaire (U_{VDC}) est réglée de préférence sur sa valeur maximale (U_{VDC_max}) par le convertisseur de tension (10, 12).

11. Groupe motopompe centrifuge selon l'une des revendications précédentes, **caractérisé en ce qu'**il s'agit d'un groupe motopompe de circulation de chauffage, d'un groupe motopompe pour installations de climatisation, d'un groupe motopompe pour applications thermiques solaires ou d'un groupe motopompe haute pression.
